# FASCICULE DE BREVET EUROPEEN

(11) **EP 3 126 864 B1**
(45) Date de publication et mention de la délivrance du brevet: **15.07.2020**
(21) Numéro de dépôt: 15711514.8
(22) Date de dépôt: 23.03.2015
(51) Int. Cl.: G01S 5/02, G01S 19/48, G01C 21/00

(54) **PROCÉDÉ DE GÉO-LOCALISATION DE L'ENVIRONNEMENT D'UN PORTEUR**
VERFAHREN ZUR GEOLOKALISIERUNG DER UMGEBUNG EINES TRÄGERS
METHOD FOR GEOLOCATING THE ENVIRONMENT OF A CARRIER

(30) Priorité: 31.03.2014 FR 1452786
(43) Date de publication de la demande: 08.02.2017
(73) Titulaire: Commissariat à l'Énergie Atomique et aux Énergies Alternatives, 75015 Paris (FR)
(72) Inventeur: LARNAOUT, Dorra, F-94110 Arcueil (FR); BOURGEOIS, Steve, F-94600 Choisy-le-Roi (FR); GAY-BELLILE, Vincent, F-75013 Paris (FR); DHOME, Michel, F-63430 Point Du Chateau (FR)
(74) Mandataire: Hammes, Pierre
(86) Numéro de dépôt international: PCT/EP2015/056037
(87) Numéro de publication internationale: WO 2015/150129

(56) Documents cités:
- US-A1- 2008 033 645
- US-A1- 2010 305 854
- DATABASE COMPENDEX [Online] ENGINEERING INFORMATION, INC., NEW YORK, NY, US; 2008, VERNAZA P ET AL: "Robust GPS/INS-aided localization and mapping via GPS bias estimation", XP002730025, Database accession no. E20080711098403 cité dans la demande & SPRINGER TRACTS IN ADVANCED ROBOTICS - EXPERIMENTAL ROBOTICS: THE 10TH INTERNATIONAL SYMPOSIUM ON EXPERIMENTAL ROBOTICS 2008 SPRINGER VERLAG DE, vol. 39, 2008, pages 101-110, DOI: 10.1007/978-3-540-77457-0_10

## Description

L'invention concerne le domaine des systèmes de géo-localisation dans un environnement extérieur, par exemple une route, ou intérieur, par exemple l'intérieur d'un bâtiment.

L'invention porte plus précisément sur un procédé et un système de géo-localisation d'un porteur, notamment un porteur mobile, qui permette le positionnement précis du porteur dans une reconstruction virtuelle de son environnement obtenu à partir de prises de vue via un système d'observation de l'environnement.

Les systèmes de localisation par triangulation, par exemple les systèmes de positionnement par satellite, par bornes Wifi localisées ou par réseau de téléphonie cellulaire, sont généralement sujets à des erreurs de localisation qui peuvent être modélisées par un bruit de mesure ainsi qu'un biais. Le bruit est généralement aléatoire et de faible ampleur. Le biais de mesure est quant à lui généralement plus important et sensiblement stable pour une période plus ou moins limitée dans le temps ainsi que sur une zone spatiale.

L'existence d'un biais de mesure impacte directement les systèmes de géo-localisation qui nécessitent une précision élevée dans le positionnement requis. Un problème technique à résoudre consiste à trouver une solution permettant de compenser ou corriger ce biais de mesure afin de rendre plus précis le positionnement.

L'estimation du biais de mesure reste néanmoins complexe puisque celui-ci peut être lié à la combinaison de phénomènes aussi différents que la nature des matériaux traversés par le signal de triangulation, le phénomène de réflexion multiple du signal émis lors de son parcours jusqu'au récepteur, l'utilisation d'un faible nombre d'émetteurs visibles, des erreurs de positionnement sur les émetteurs ou encore une mauvaise synchronisation des horloges entre les différents émetteurs.

Pour estimer le biais affectant les données de navigation issues d'un système de localisation par triangulation, on connait des méthodes basées sur la mesure du vecteur reliant la position courante fournie par le système de localisation par triangulation avec celle fournie par un système de perception de l'environnement. De telles méthodes sont notamment décrites dans les documents [1] et [2] qui concernent un système de perception basé sur une caméra et dans le document [3] qui décrit une solution basée sur un couple de caméra ou tête stéréo. D'autres systèmes de perception de l'environnement, tels que des systèmes lidar ou radar, sont également envisagés dans l'art antérieur.

Selon les méthodes précitées de l'art antérieur, la mesure dudit vecteur fait généralement intervenir des incertitudes associées à chaque mesure de position, c'est-à-dire aussi bien les mesures fournies par le système de localisation par triangulation comme celles fournies par le système de perception. Cette mesure est complétée à l'aide d'une prédiction du biais de mesure et de son incertitude associée qui est basée sur un modèle d'évolution du biais et qui est estimée à l'aide de méthodes de filtrage du type Filtre de Kalman ([1]) ou Filtre Particulaire ([2]). Ces méthodes d'estimation de type filtrage permettent ainsi de prendre en compte le fait que le biais peut parfois être stable d'une mesure à l'autre ou évoluer lentement.

Les méthodes décrites dans les trois documents précités présentent cependant plusieurs inconvénients quant à leur robustesse.

Tout d'abord, les méthodes utilisées pour prédire et mettre à jour l'estimation du biais ne sont pas robustes à la présence d'estimations erronées du biais.

En effet, ces méthodes ne permettent pas de remettre en cause les estimations, effectuées à un instant antérieur, de la valeur et de l'incertitude du biais car celles-ci ne sont pas réévaluées. Au contraire, en cas de mauvaise estimation, le mécanisme de prédiction du biais et de propagation de l'incertitude associée aura tendance à propager l'erreur commise. Dans le cas de figure où l'incertitude prédite est incompatible avec les incertitudes estimées par les différents systèmes de localisation, certains systèmes proposent de redémarrer l'estimation du biais à zéro (autrement dit de considérer que le biais est nul avec une grande incertitude). Si cela est généralement préférable à la propagation d'une mauvaise estimation, cette solution entraine une perte de précision.

Un second problème de robustesse des méthodes connues de l'art antérieur est lié au fait que la position fournie par le système de perception repose sur la mise en correspondance des observations courantes (par exemple l'image courante de la caméra dans le document [1], ou la reconstruction courante d'une tête stéréo dans le document [3]) fournies par le capteur de perception avec une carte connue de l'environnement. Un exemple de mise en correspondance concerne la mise en correspondance entre la position d'un passage piéton dans l'image d'une caméra avec la position de ce piéton dans une carte routière. Pour pouvoir réaliser cette mise en correspondance les solutions connues exploitent la position estimée à l'instant courant du système.

Cette approche présente notamment deux inconvénients. Premièrement, puisque les données de navigation fournies par le système de localisation sont utilisées comme a priori pour guider la mise en correspondance, l'absence d'estimation du biais de mesure sur ces données ou une estimation peu précise ou encore une estimée erronée de celui-ci, peut perturber cette étape de mise en correspondance.

Deuxièmement, même en présence d'une estimation correcte du biais de mesure sur les données de navigation, il n'est pas réaliste de considérer la localisation fournie par le système de perception de l'environnement comme totalement fiable. En effet, utiliser les observations fournies uniquement à l'instant courant par le système de perception peut s'avérer trop peu discriminant pour permettre d'établir une correspondance précise avec la carte, en raison de l'existence d'ambigüités de localisation. Par exemple, un carrefour avec une forte concentration de passages piéton risque d'entrainer une erreur d'association. Une erreur d'association peut survenir et entrainer une localisation dont l'incertitude est très sous-évaluée, voir incohérente vis-à-vis de la localisation locale. Hors, comme indiqué précédemment, le processus d'estimation du biais est peu robuste aux données aberrantes.

Dans le document [3], les auteurs proposent de localiser un système embarquant un récepteur GPS, une centrale inertielle et un couple de caméras. Le système utilise les données fournies par l'ensemble de ces capteurs pour estimer la position du système à l'aide d'un algorithme de filtre à particules. Pour estimer le biais affectant les données fournies par le récepteur GPS, cette solution propose d'aligner la reconstruction de l'environnement fournie à l'instant courant par le couple de caméras avec une carte en trois dimensions de l'environnement.

Cette approche s'avère limitée en termes de robustesse et de précision. En effet, l'alignement d'une seule reconstruction stéréo avec un modèle 3D de l'environnement peut s'avérer ambigüe lorsque la géométrie de la scène observée présente des structures répétitives ou une seule structure très simple. Par exemple, l'observation d'un mur plan ne permet pas de contraindre la position du système vis-à-vis d'une translation parallèle au mur. Le système de perception de l'environnement risque donc de fournir une localisation erronée qui perturbera l'estimation du biais. Dans un tel cas de figure, le biais GPS risque soit d'être mal estimé (mauvais appariement) soit d'être estimé de manière peu fréquente (le système identifie le problème d'appariement et décide de ne pas estimer le biais).

On connait également la méthode de localisation d'un porteur décrite dans la demande de brevet américaine US 2008/0033645.

La présente invention vise à remédier aux inconvénients des solutions de l'art antérieur en proposant un procédé de géo-localisation de l'environnement d'un porteur qui exploite à la fois des données de navigation fournies par un système de localisation par triangulation et une reconstruction virtuelle de l'environnement fournie par un système de perception et qui permet de corriger le biais de mesure sur les données de navigation.

L'approche proposée par l'invention permet d'offrir une estimation plus précise et plus robuste du biais du système de localisation. Dans le cas non limitatif où le système de perception est une tête stéréo, au lieu de considérer uniquement une reconstruction stéréo fournie par une tête stéréo à l'instant courant, l'invention permet d'exploiter les N dernières observations de cette tête stéréo afin de créer une reconstruction plus complète de l'environnement respectant les contraintes de la géométrie multi-vue induite par l'ensemble des couples d'image stéréo. La reconstruction obtenue, bien qu'imparfaite offre un meilleur pouvoir discriminant lors de l'étape de mise en correspondance avec une carte 3D de l'environnement puisque cette reconstruction couvre une plus grande zone de la scène, ce qui réduit la probabilité que celle-ci ne comporte que des structures répétitives ou une structure trop simple. L'invention présente donc l'avantage de permettre une mise en correspondance plus robuste, ce qui limite le risque de données aberrantes.

De plus, le biais estimé grâce au procédé selon l'invention est celui pour lequel une reconstruction à partir des N dernières observations de la tête stéréo s'aligne au mieux avec la carte 3D de l'environnement tout en vérifiant, dans ce cas, les contraintes de la géométrie multi-vue. La présence de ces contraintes multi-vue et le fait que l'estimation des biais affectant les données se fait de manière globale réduit la probabilité qu'une erreur locale de reconstruction par la tête stéréo puisse perturber l'estimation du biais. Le fait que le biais de chaque donnée de navigation est ré-estimé à chaque instant permet la remise en cause des estimations passées, et ainsi favorise la détection et la correction d'estimation de biais erronées.

L'invention a pour objet un procédé de géo-localisation de l'environnement d'un porteur comprenant les étapes suivantes :
- Acquérir une pluralité de prises de vue de l'environnement du porteur,
- Déterminer au moins une information relative à la position du porteur pour un ensemble de prises de vue,
- Générer une reconstruction virtuelle de l'environnement à partir des prises de vue dudit ensemble, des informations de position et d'un paramètre de biais de mesure pour chaque position, ladite reconstruction virtuelle étant paramétrée en fonction du biais de mesure,
- Modifier le paramètre de biais de mesure à appliquer à chaque position pour obtenir une reconstruction virtuelle paramétrée par un biais de mesure modifié, la modification étant effectuée de manière à minimiser une distance entre ladite reconstruction virtuelle modifiée et une représentation virtuelle a priori de l'environnement.

Selon un mode particulier de réalisation de l'invention, la génération d'une reconstruction virtuelle de l'environnement comprend :
- La correction de chaque donnée de navigation par un paramètre de biais,
- La génération d'une reconstruction virtuelle de l'environnement à partir de la pluralité de prises de vue et des informations de position corrigées.

Selon un mode particulier de réalisation de l'invention, la génération d'une reconstruction virtuelle de l'environnement comprend :
- La génération d'une reconstruction virtuelle de l'environnement à partir de la pluralité de prises de vue,
- L'application, à la dite reconstruction virtuelle, d'une déformation calculée à partir des informations de position et des paramètres de biais .

Selon un mode particulier de réalisation de l'invention, la génération d'une reconstruction virtuelle de l'environnement comprend la génération d'une pluralité d'éléments géométriques paramétrés par ledit biais de mesure et définissant ladite reconstruction et la modification de la reconstruction virtuelle de l'environnement comprend les sous-étapes suivantes, exécutées itérativement :
- Une étape de mise en correspondance entre une pluralité d'éléments géométriques paramétrés de la reconstruction virtuelle et une pluralité d'éléments géométriques fixes de la représentation virtuelle a priori,
- Une étape de calcul d'au moins une distance entre une pluralité d'éléments géométriques paramétrés de ladite reconstruction virtuelle et une pluralité d'éléments géométriques fixes correspondants dans ladite représentation a priori,
- Une étape de modification dudit paramètre de biais de mesure de sorte à minimiser ladite distance.

Selon un mode particulier de réalisation de l'invention, une même valeur de biais est associée à un groupe de prises de vue.

Selon un mode particulier de réalisation de l'invention, les valeurs des biais associées aux différentes prises de vue sont liées entre elles par un modèle paramétrique ou non paramétrique.

Selon un mode particulier de réalisation de l'invention, ledit ensemble de prises de vue est pris dans une fenêtre glissante dans le temps ou dans l'espace.

Selon un mode particulier de réalisation de l'invention, la distance entre ladite reconstruction virtuelle et la représentation virtuelle a priori est une distance dans l'espace point à point ou point à plan ou plan à plan ou une erreur de re-projection dans le plan ou une combinaison de plusieurs de ces distances.

Selon un mode particulier de réalisation de l'invention, la représentation virtuelle a priori de l'environnement est une représentation cartographique comprenant au moins un modèle parmi un modèle d'élévation de terrain, un modèle en trois dimensions des bâtiments d'une zone géographique, un nuage de points en trois dimensions, un plan d'architecte.

Selon un mode particulier de réalisation de l'invention, l'acquisition d'une pluralité de prises de vue de l'environnement du porteur est réalisée à l'aide d'un système de perception de l'environnement du porteur.

Selon un mode particulier de réalisation de l'invention, la détermination d'au moins une donnée de navigation du porteur pour un ensemble de prises de vue est réalisée à l'aide d'un système de localisation par triangulation.

L'invention a également pour objet un programme d'ordinateur comportant des instructions pour l'exécution du procédé de géo-localisation de l'environnement d'un porteur selon l'invention, lorsque le programme est exécuté par un processeur et un support d'enregistrement lisible par un processeur sur lequel est enregistré un programme comportant des instructions pour l'exécution du procédé géo-localisation de l'environnement d'un porteur selon l'invention, lorsque le programme est exécuté par un processeur.

L'invention a encore pour objet un système de géo-localisation, destiné à être embarqué sur un porteur, comprenant un système de perception de l'environnement du porteur apte à acquérir une pluralité de prises de vue, un système de localisation par triangulation apte à délivrer au moins une donnée de navigation pour chaque prise de vue, une base de données contenant une représentation virtuelle a priori de l'environnement et un processeur configuré pour exécuter le procédé de géo-localisation de l'environnement d'un porteur selon l'invention afin de produire une reconstruction virtuelle géo-localisée de l'environnement du porteur.

Le système de perception de l'environnement du porteur peut être une caméra à prise de vue en deux dimensions ou un couple de caméras à prise de vue en deux dimensions ou une caméra à prise de vue en trois dimensions ou un système lidar ou un système radar.

Le système de localisation par triangulation peut être un système de géo-localisation par satellite ou un système de géo-localisation par réseau Wifi ou un système de géo-localisation par réseau de téléphonie mobile.

D'autres caractéristiques et avantages de la présente invention apparaîtront mieux à la lecture de la description qui suit en relation aux dessins annexés qui représentent:
- La figure 1, un synoptique d'un système de géo-localisation selon l'invention,
- La figure 2, un organigramme illustrant les étapes de mise en œuvre du procédé selon l'invention,

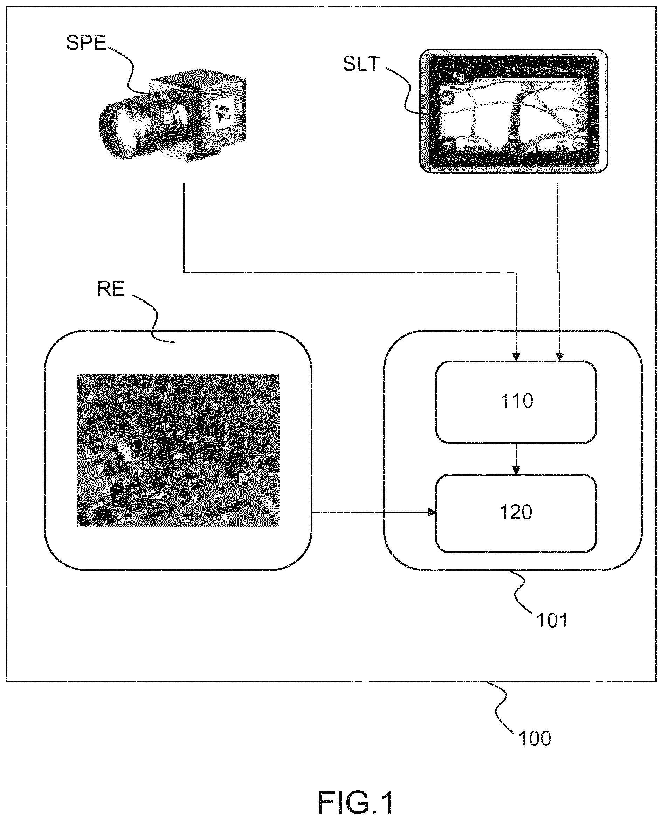

La figure 1 représente un synoptique d'un système 100 de géo-localisation selon l'invention, destiné à être embarqué sur un porteur mobile ou non, par exemple un véhicule.

Un tel système comporte un système de perception de l'environnement SPE qui est apte à capturer des prises de vue de l'environnement du système 100 de géo-localisation. Le système de perception de l'environnement SPE peut comprendre mais n'est pas limité à une caméra à prise de vue en deux dimensions, un couple de caméras à prise de vue en deux dimensions, une caméra à prise de vue en trois dimensions, un système lidar ou un système radar. Tout autre dispositif équivalent permettant d'acquérir une pluralité de prises de vues de l'environnement est compatible du système 100 selon l'invention.

Le système 100 selon l'invention comporte également un système de localisation par triangulation SLT qui peut comprendre mais n'est pas limité à un récepteur GNSS, par exemple un récepteur GPS, un récepteur de localisation basé sur un réseau WIFI ou sur un réseau de téléphonie cellulaire ou tout autre système permettant d'obtenir des données de navigation relatives au porteur du système 100. Les données de navigation comprennent notamment toute information concernant la position du système 100 ou toute information permettant de déduire indirectement une information sur la position du système 100, en particulier la vitesse ou l'accélération.

Le système 100 selon l'invention comporte également une base de données contenant une représentation a priori de l'environnement RE qui peut prendre la forme d'une cartographie de l'environnement dans lequel est supposé se déplacer le porteur du système 100 sous diverses formes incluant, de façon non limitative, un modèle d'élévation de terrain, un modèle en trois dimensions des bâtiments d'une zone géographique, un nuage de points en trois dimensions, un plan d'architecte d'un bâtiment mais également des données issues d'un système d'information géographique (SIG) ou d'un logiciel de représentation et d'exploration visuelle.

Le système 100 selon l'invention comporte également un processeur 101 comprenant un premier module de calcul 110 configuré pour générer une reconstruction virtuelle de l'environnement à partir des prises de vues capturées, des données de navigation associées à ces prises de vues et d'un biais de mesure. Le processeur 101 comporte également un second module de calcul 120 configuré pour comparer la reconstruction virtuelle déterminée par le premier module de calcul 110 avec la représentation a priori de l'environnement stockée dans la base de données pour en déduire une géo-localisation précise de cette reconstruction de l'environnement ainsi qu'une estimée du biais de mesure affectant les données de navigation.

Les étapes de calcul mises en œuvre par le processeur 101 sont développées plus en amont dans la description,

Le processeur 101 peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array ») ou tout autre dispositif de calcul équivalent.

Le procédé de géo-localisation selon l'invention décrit ci après peut être mis en œuvre en tant que programme d'ordinateur comportant des instructions pour son exécution. Le programme d'ordinateur peut être enregistré sur un support d'enregistrement lisible par le processeur 101.

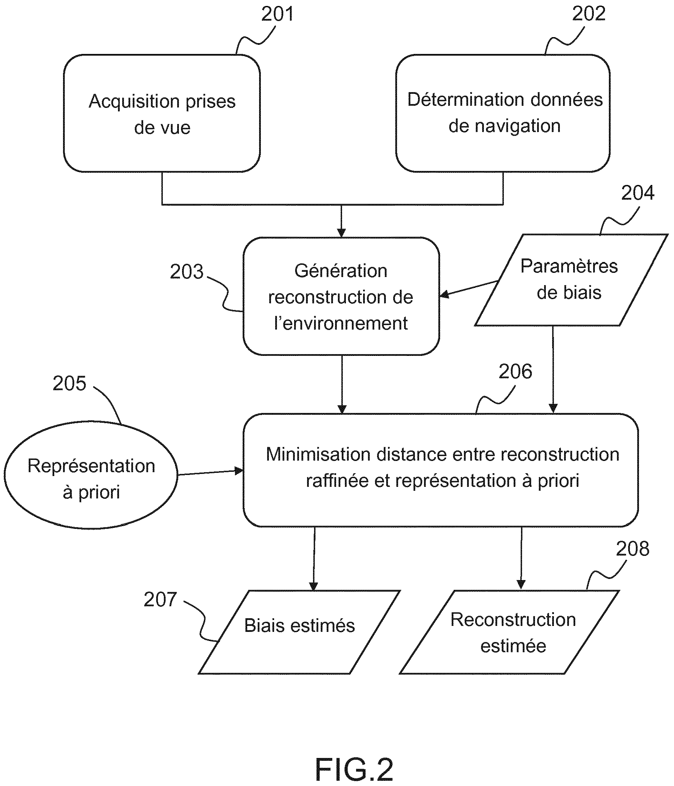

La figure 2 représente les étapes de mise en œuvre du procédé de géo-localisation selon l'invention sous la forme d'un organigramme.

Dans une première étape 201, le système de perception de l'environnement SPE effectue l'acquisition d'une pluralité de prises de vue de l'environnement. Autrement dit, si le système de perception SPE est constitué d'une caméra, celle-ci capture plusieurs images de l'environnement. Cette pluralité d'images peut être composée de plusieurs images successives selon un ordre temporel ou de plusieurs images d'une même scène prises selon différents points de vue spatiaux.

Dans une deuxième étape 202, le système de localisation SLT détermine, pour chaque prise de vue de l'environnement, une information sur la position du système 100. Les positions estimées sont entachées d'un biais de mesure que l'on cherche à estimer précisément. Le biais peut être indépendant pour chaque prise de vue ou peut suivre une variation vérifiant des propriétés connues, par exemple un modèle de variation.

Le principe à la base de l'invention consiste à estimer, pour chaque prises de vue, le biais 204 impactant la position estimée par le système de localisation, qui permet d'obtenir une reconstruction virtuelle de l'environnement la plus proche d'une représentation a priori 205 de l'environnement.

Dans une troisième étape 203, une reconstruction virtuelle géo-localisée de l'environnement est générée à partir des différentes prises de vue et des positions associées à chaque prise de vue. En outre, on associe un paramètre de biais à chaque position de sorte à produire une reconstruction paramétrée multi-vues en fonction des valeurs de biais associées à chaque prise de vue.

On note M^{W} la reconstruction virtuelle générée. Celle-ci peut être constituée d'un ensemble de points, de segments, de régions, de plans ou bien encore un maillage, une carte d'occupation, ou une représentation probabiliste volumétrique. Tous ces exemples sont donnés à titre illustratif et non limitatif, tout type de représentation virtuelle d'une scène peut être envisagé par l'Homme du métier.

Pour générer une reconstruction d'un environnement à partir de différentes prises de vue, il existe plusieurs algorithmes de l'état de l'art qui peuvent être utilisés en fonction du capteur envisagé pour le système de perception de l'environnement. Par exemple si le capteur de perception de l'environnement est une caméra alors des algorithmes de type « slam », tels que décrits dans les références [4] et [5] ou « structure from motion » tels que décrit dans la référence [13] permettent d'obtenir une reconstruction en trois dimensions éparse ou dense de l'environnement.

Dans le cadre d'un capteur de type lidar ou laser, les différentes reconstructions ponctuelles peuvent être agglomérées en une seule reconstruction globale consistante par des approches du type ICP (iterative closest point) telles que décrites dans la publication [14].

Les positions fournies par le capteur de localisation, notées P^{W} = {P^{W}ⱼ}, i variant de 1 à N avec N le nombre de prises de vue, peuvent être utilisées directement par certains des algorithmes précités afin d'obtenir une reconstruction en trois dimensions localisée dans un repère W du système de localisation.

Ces positions sont soumises à un paramètre de biais noté b. On note alors f(O,P^{W},b) la fonction de reconstruction virtuelle localisée permettant d'obtenir la reconstruction M^{W} de l'environnement à partir des observations O ={Oⱼ} avec j variant de 1 à N, issues des N acquisitions du système de perception.

Toute autre méthode connue équivalente à celles décrites dans les références [4], [5], [13] et [14] qui permettent d'obtenir une représentation virtuelle géo-localisée d'un environnement visuel à partir de plusieurs prises de vue de cet environnement et de localisations associées peut être utilisée en lieu et place des méthodes référencées. On peut citer également les méthodes décrites dans les documents [6] et [7].

Selon une première variante de réalisation de l'étape 203 du procédé selon l'invention, la reconstruction virtuelle paramétrée de l'environnement peut être générée en corrigeant au préalable chaque information de position d'un paramètre de biais puis en générant la reconstruction virtuelle à partir des prises de vue et des positions corrigées paramétrées par le biais.

Selon une seconde variante de réalisation de l'étape 203 du procédé selon l'invention, la reconstruction virtuelle paramétrée de l'environnement peut être générée directement à partir des prises de vue. On note g la fonction de reconstruction appliquée aux observations O pour obtenir la reconstruction M^{L} dans un repère géométrique L potentiellement différent du repère W attaché au système de localisation SLT.

Dans un second temps, une déformation A est calculée à partir des données P^{W} issues du système de localisation par triangulation et des paramètres de biais b associés à chacune des données de localisation par triangulation. La déformation A est appliquée à la reconstruction M^{L} afin que celle ci soit exprimée dans le repère W du système de localisation et soit cohérent avec les données issues du système de localisation par triangulation. La déformation A utilisée peut être une similitude ou bien une approche plus évoluée qui prendra en compte les erreurs locales de positionnement comme par exemple l'estimation d'une transformation non rigide, par exemple une déformation de type B-Spline ou TPS (Thin Plate Spline)

Dans une quatrième étape 206, on compare la reconstruction paramétrée obtenue à l'issue de la troisième étape 203 avec la représentation a priori de l'environnement 205 dans le but de rechercher les valeurs optimales des paramètres de biais à appliquer à chaque vue pour obtenir une reconstruction de l'environnement la plus semblable à la représentation a priori.

L'origine principale du décalage entre la reconstruction M^{W} et la représentation a priori de l'environnent Δ^{W} est le biais du capteur de localisation. Les autres sources d'erreurs sont les imprécisions locales due à la méthode de reconstruction de l'environnement virtuel ou encore des a priori sur l'environnement imparfait.

Les valeurs optimales des paramètres de biais affectant le capteur de localisation sont celles qui engendrent la reconstruction virtuelle de l'environnement qui s'aligne au mieux sur l'a priori de l'environnement. Ainsi les paramètres de biais b sont estimés par minimisation d'une erreur entre la reconstruction virtuelle et la représentation a priori de l'environnement. Cette erreur peut être calculée comme une distance entre la reconstruction et la représentation a priori, le problème à résoudre consistant alors à trouver les valeurs des paramètres de biais b = {bᵢ}, pour i variant de 1 à N, qui minimisent la distance d, ce qui peut être exprimé comme la minimisation de la fonction de coût F(b)= d(f(O,P^{W},b), Δ^{W}). Une modification du biais engendrant une modification de la reconstruction via la fonction f(O,P^{W},b), la reconstruction virtuelle de l'environnement est ré-estimée au cours du processus de minimisation permettant ainsi de remettre en cause la reconstruction initiale qui était entachée d'erreurs en raison du biais.

La distance d donne une information sur les différences entre la reconstruction et la représentation a priori. Toute distance géométrique permettant d'obtenir une information sur ces différences peut être envisagée. En particulier, la distance d peut être une distance dans l'espace point à point ou point à plan ou plan à plan ou une erreur de re-projection dans le plan tel qu'introduit dans les documents [17] et [18] ou une combinaison de plusieurs de ces distances.

Plus généralement la distance d est calculée entre deux éléments géométriques correspondants, par exemple entre un point de la reconstruction virtuelle et le point correspondant dans la représentation a priori de l'environnement.

La minimisation de la fonction de coût F(b) peut être effectuée par tout algorithme d'optimisation linéaire ou non linéaire connu tel que par exemple l'algorithme de Levenberg Marquardt décrit dans le document [15] ou les solutions décrites dans les articles [20], [21], [22] et [23].

Lorsque les correspondances entre la reconstruction et la représentation a priori ne sont pas connues, on procède en deux étapes. Dans une première étape, une mise en correspondance est choisie entre les éléments géométriques de la reconstruction et ceux de la représentation a priori puis dans une seconde étape on minimise la fonction de coût F(b). Les deux étapes peuvent être itérées plusieurs fois afin de remettre en cause le processus complet de reconstruction de part les variations de biais à chaque itération de l'optimisation ce qui permet ainsi de prendre en compte les imprécisions locales de la reconstruction. Une telle approche itérative est notamment décrite dans le document [16].

Le résultat de l'opération de minimisation de la fonction de coût F(b) permet d'obtenir les valeurs de biais b = {bᵢ} optimales permettant de corriger les informations de positionnement et permet également d'obtenir une reconstruction virtuelle géo-localisée avec un positionnement dont la précision est améliorée par rapport à l'exploitation seule des données fournies par un système de localisation par triangulation.

Selon une variante de réalisation de l'invention, une même valeur de paramètre de biais peut être appliquée à un groupe de prises de vue en fonction d'informations externes au système. Par exemple, une hypothèse peut être prise quant à l'évolution temporelle du biais sur l'horizon du nombre de prises de vue exploitées. Autrement dit, le biais peut être supposé constant sur une durée équivalente à plusieurs prises de vue.

La prise en compte d'hypothèses de variations du biais permet de diminuer le nombre de paramètres de la fonction de coût à minimiser et donc de réduire la complexité.

Des informations externes peuvent être prises en compte pour affiner le modèle d'évolution du biais. Par exemple, dans le cas d'un système de positionnement par satellite, une information concernant les pertes de signal reçu par un satellite peut être exploitée pour affiner les plages de variations supposées du biais.

Selon une autre variante de réalisation de l'invention, les différents paramètres de biais peuvent être liés à l'aide d'un modèle paramétrique comprenant par exemple une translation, une transformation rigide, une similitude, une similitude par morceaux, une déformation de type B-Spline ou une transformation de type TPS (Thin Plate Spline).

Les paramètres de biais peuvent aussi être liés à l'aide d'un modèle non paramétrique, par exemple un modèle basé sur un champ de déformation régularisé.

L'utilisation d'un modèle paramétrique ou non paramétrique pour relier les paramètres de biais permet là encore de limiter le nombre de paramètres de la fonction de coût et ainsi de réduire la complexité de résolution.

Selon une autre variante de réalisation de l'invention, les prises de vues retenues sont prises dans une fenêtre temporelle glissante, ce qui permet de réduire le nombre de données à prendre en compte pour la reconstruction virtuelle mais aussi indirectement de limiter le nombre de paramètres de biais.

Dans le cas où on utilise une méthode de reconstruction du type localisation et cartographie simultanées, les prises de vue retenues peuvent peut être sélectionnées comme des images clefs.

Les prises de vues peuvent également être sélectionnées au sein d'une fenêtre spatiale, autrement dit on peut sélectionner plusieurs points de vue différents d'une même scène.

L'invention permet de fournir une géo-localisation précise de l'environnement d'un porteur en compensant le biais de mesure des données de navigation fournies par un système de localisation par triangulation.

A la différence des solutions de l'art antérieur, l'invention n'est pas basée sur une estimation du biais de mesure par une différence entre la position courante fournie par le système de localisation par triangulation et la localisation courante fournie par un système de perception.

Au contraire, l'invention utilise un procédé de reconstruction de l'environnement exploitant à la fois les observations du système de perception et les informations de localisation fournies par un système de triangulation, et une recherche des valeurs de biais pour lesquelles la correction du biais dans le procédé de reconstruction permettrait d'aligner au mieux la reconstruction de l'environnement avec un modèle géométrique de l'environnement connu a priori.

Le critère utilisé pour caractériser la qualité d'estimation du biais se distingue donc des critères usuels basés sur un alignement des mesures de localisation d'un système de triangulation avec celles fournies par un système de perception.

Le critère utilisé par l'invention consiste au contraire en un alignement de la reconstruction avec un modèle de l'environnement.

En utilisant une reconstruction exploitant plusieurs observations du système de perception, des contraintes géométriques supplémentaires sont introduites, ce qui rend le système selon l'invention plus robuste que les systèmes classiques n'exploitant que les observations courantes.

De plus, cette reconstruction couvrant une plus grande zone de l'environnement, elle permet d'établir un alignement avec le modèle géométrique connu a priori avec une plus grande certitude et avec une plus grande fréquence.

En ré-estimant à chaque instant le biais pour un ensemble de données de triangulation, l'invention offre une meilleure robustesse à des estimations erronées car les estimations passées sont remises en cause au vues des nouvelles données fournies par les systèmes de localisation par triangulation et de perception.

Le procédé selon l'invention permet une estimation plus précise, plus fréquente et plus robuste du biais affectant les données issues d'un système de localisation par triangulation. Cette solution peut être utilisée avec un grand nombre de système de localisation par triangulation et de perception ainsi qu'un grand nombre de modèles géométriques a priori sur l'environnement.

En particulier, l'invention peut fonctionner avec des capteurs bas coût, tels qu'un récepteur GPS grand public et une simple caméra et un modèle 3D basse définition de l'environnement. Le rapport entre d'une part le cout et la facilité de déploiement et d'autre part la qualité et la continuité de service de localisation offert par cette solution permet d'envisager une exploitation dans un grand nombre d'applications, que ce soit dans le domaine de l'aide à la navigation, par exemple le guidage par réalité augmentée ou dans le domaine des robots ou véhicules autonomes.

### Références

[1] J. Laneurit, R. Chapuis et F. Chausse, «Accurate Vehicle Positioning on a Numerical Map,» INTERNATIONAL JOURNAL OF CONTROL AUTOMATION AND SYSTEMS, 2005.
[2] K. C. M. S. Kichun Jo, «GPS-bias correction for precise localization of autonomous vehicles,» chez Intelligent Vehicles Symposium (IV), 2013 IEEE, 2013.
[3] L. D. D. Vernaza P., «Robust GPS/INS-aided localization and mapping via GPS bias estimation,» chez 10th International Symposium on Experimental Robotics, 2008.
[4] L. M. D. M. D. F. S. P. Mouragnon E., « Real-Time Localization and 3D Reconstruction,» chez IEEE Conférence on Computer Vision and Pattern Récognition, 2006.
[5] K. Georg et M. David, «Parallel Tracking and Mapping for Small AR Workspaces,» chez International Symposium on Mixed and Augmented Reality, 2007.
[6] L. S.,. D. A. Newcombe Richard A., «DTAM: Dense tracking and mapping in real-time,» chez IEEE International Conférence onComputer Vision , 2011.
[7] V. Pradeep, C. Rhemann, S. Izadi, C. Zach, M. Bleyer et S. Bathiche, «MonoFusion: Real-time 3D reconstruction of small scenes with a single web caméra,» chez IEEE International Symposium onMixed and Augmented Reality, 2013.
[8] R. A. Newcombe, S. Izadi, O. Hilliges, D. Molyneaux, D. Kim, A. J. Davison, P. Kohli, J. Shotton, S. Hodges et A. Fitzgibbon, «KinectFusion: Real-Time Dense Surface Mapping and Tracking,» chez International Symposium on Mixed and Augmented Reality, 2011.
[9] M. Lhuillier, «Fusion of GPS and Structure-from-Motion using Constrained Bundle Adjustments,» chez IEEE Conférence on Computer Vision and Pattern Récognition, 2011.
[10] C. Strecha, T. Pylvänäinen et P. Fua, «Dynamic and scalable large scale image image reconstruction,» chez 3D Data Processing, Visualization and Transmission, 2010.
[11] R. S. Kaminsky, N. Snavely, S. M. Seitz et R. Szeliski, «Alignment of 3D point clouds to overhead image,» chez Workshop on Internet Vision, 2009.
[12] N. Sunderhauf, «Robust Optimization for Simultaneous Localization and Mapping,» (PhD), 2012.
[13] S. Agarwal, N. Snavely, I. Simon, S. Seitz et R. Szeliski, « Building Rome in a Day,» chez ICCV , 2009.
[14] W. D. Lui, T. J. J. Tang, T. Drummond et W. Li, «Robust egomotion estimation using ICP in inverse depth coordinates.,» chez ICRA, 2012.
[15] K. Levenberg, « A method for the solution of certain non-linear problems in least squares.,» chez Quarterly of Applied Mathematics , 1944.
[16] R. M. Neal et G. E. Hinton, «A View of the EM Algorithm that Justifies Incremental, Sparse, and Other Variants.,» chez Learning in Graphical Models, 1998.
[17] P. Lothe, S. Bourgeois, F. Dekeyser, E. Royer et M. Dhome, «Towards Geographical Referencing of Monocular SLAM Reconstruction Using 3D City Models: Application to Real-Time Accurate Vision-Based Localization,» chez IEEE Conférence on Computer Vision and Pattern Récognition , 2009.
[18] M. Tamaazousti, V. Gay-Bellile, S. Naudet-Collette, S. Bourgeois et M. Dhome, «NonLinear refinement of structure from motion reconstruction by taking advantage of a partial knowledge of the environment,» chez CVPR, 2011.
[19] C.-P. Wang, K. Wilson et N. Snavely, «Accurate georegistration of point clouds using géographie data,» chez 3DV, 2013.
[20] http://en.wikipedia.org/wiki/lteratively_reweighted_least_squares
[21] http://en.wikipedia.org/wiki/Conjugate_gradient_method
[22] Lourakis, M. I A; Argyros, A.A., "Is Levenberg-Marquardt the most efficient optimization algorithm for implementing bundle adjustment?," Computer Vision, 2005. ICCV 2005. Tenth IEEE International Conférence on , vol.2, no., pp.1526,1531 Vol. 2, 17-21 Oct. 2005
[23] http://en.wikipedia.org/wiki/Simulated_annealing

## Revendications

1. Procédé de géo-localisation de l'environnement d'un porteur comprenant les étapes suivantes :
- Acquérir (201) une pluralité de prises de vue de l'environnement du porteur,
- Déterminer (202) au moins une information relative à la position du porteur pour un ensemble de prises de vue,
- Générer (203) une reconstruction virtuelle de l'environnement à partir des prises de vue dudit ensemble, des informations de position et d'un paramètre de biais de mesure (204) pour chaque position, ladite reconstruction virtuelle étant paramétrée en fonction du biais de mesure (204),
- Modifier (206) le paramètre de biais de mesure (204) à appliquer à chaque position pour obtenir une reconstruction virtuelle paramétrée par un biais de mesure modifié, la modification (206) étant effectuée de manière à minimiser une distance entre ladite reconstruction virtuelle modifiée et une représentation virtuelle a priori (205) de l'environnement.

2. Procédé de géo-localisation de l'environnement d'un porteur selon la revendication 1 dans lequel la génération (203) d'une reconstruction virtuelle de l'environnement comprend :
- La correction de chaque donnée de navigation par un paramètre de biais (204),
- La génération d'une reconstruction virtuelle de l'environnement à partir de la pluralité de prises de vue et des informations de position corrigées.

3. Procédé de géo-localisation de l'environnement d'un porteur selon la revendication 1 dans lequel la génération (203) d'une reconstruction virtuelle de l'environnement comprend :
- La génération d'une reconstruction virtuelle de l'environnement à partir de la pluralité de prises de vue,
- L'application, à la dite reconstruction virtuelle, d'une déformation calculée à partir des informations de position et des paramètres de biais (204).

4. Procédé de géo-localisation de l'environnement d'un porteur selon la revendication 1 dans lequel la génération (203) d'une reconstruction virtuelle de l'environnement comprend la génération d'une pluralité d'éléments géométriques paramétrés par ledit biais de mesure et définissant ladite reconstruction et la modification (206) de la reconstruction virtuelle de l'environnement comprend les sous-étapes suivantes, exécutées itérativement :
- Une étape de mise en correspondance entre une pluralité d'éléments géométriques paramétrés de la reconstruction virtuelle et une pluralité d'éléments géométriques fixes de la représentation virtuelle a priori,
- Une étape de calcul d'au moins une distance entre une pluralité d'éléments géométriques paramétrés de ladite reconstruction virtuelle et une pluralité d'éléments géométriques fixes correspondants dans ladite représentation a priori,
- Une étape de modification dudit paramètre de biais de mesure de sorte à minimiser ladite distance.

5. Procédé de géo-localisation de l'environnement d'un porteur selon l'une des revendications précédentes dans lequel une même valeur de biais est associée à un groupe de prises de vue.

6. Procédé de géo-localisation de l'environnement d'un porteur selon l'une des revendications précédentes dans lequel les valeurs des biais associées aux différentes prises de vue sont liées entre elles par un modèle paramétrique ou non paramétrique.

7. Procédé de géo-localisation de l'environnement d'un porteur selon l'une des revendications précédentes dans lequel ledit ensemble de prises de vue est pris dans une fenêtre glissante dans le temps ou dans l'espace.

8. Procédé de géo-localisation de l'environnement d'un porteur selon l'une des revendications précédentes dans lequel la distance entre ladite reconstruction virtuelle et la représentation virtuelle a priori est une distance dans l'espace point à point ou point à plan ou plan à plan ou une erreur de re-projection dans le plan ou une combinaison de plusieurs de ces distances.

9. Procédé de géo-localisation de l'environnement d'un porteur selon l'une des revendications précédentes dans lequel la représentation virtuelle a priori de l'environnement est une représentation cartographique comprenant au moins un modèle parmi un modèle d'élévation de terrain, un modèle en trois dimensions des bâtiments d'une zone géographique, un nuage de points en trois dimensions, un plan d'architecte.

10. Procédé de géo-localisation de l'environnement d'un porteur selon l'une des revendications précédentes dans lequel l'acquisition d'une pluralité de prises de vue de l'environnement du porteur est réalisée à l'aide d'un système de perception de l'environnement du porteur.

11. Procédé de géo-localisation de l'environnement d'un porteur selon l'une des revendications précédentes dans lequel la détermination d'au moins une donnée de navigation du porteur pour un ensemble de prises de vue est réalisée à l'aide d'un système de localisation par triangulation.

12. Programme d'ordinateur comportant des instructions pour l'exécution du procédé de géo-localisation de l'environnement d'un porteur selon l'une quelconque des revendications 1 à 11, lorsque le programme est exécuté par un processeur.

13. Support d'enregistrement lisible par un processeur sur lequel est enregistré un programme comportant des instructions pour l'exécution du procédé géo-localisation de l'environnement d'un porteur selon l'une quelconque des revendications 1 à 11, lorsque le programme est exécuté par un processeur.

14. Système (100) de géo-localisation, destiné à être embarqué sur un porteur, comprenant un système (SPE) de perception de l'environnement du porteur apte à acquérir une pluralité de prises de vue, un système (SLT) de localisation par triangulation apte à délivrer au moins une donnée de navigation pour chaque prise de vue, une base de données (RE) contenant une représentation virtuelle a priori de l'environnement et un processeur (101) configuré pour exécuter le procédé de géo-localisation de l'environnement d'un porteur selon l'une quelconque des revendications 1 à 11 afin de produire une reconstruction virtuelle géo-localisée de l'environnement du porteur.

15. Système de géo-localisation selon la revendication 14 dans lequel le système (SPE) de perception de l'environnement du porteur est une caméra à prise de vue en deux dimensions ou un couple de caméras à prise de vue en deux dimensions ou une caméra à prise de vue en trois dimensions ou un système lidar ou un système radar.

16. Système de géo-localisation selon l'une des revendications 14 ou 15 dans lequel le système (SLT) de localisation par triangulation est un système de géo-localisation par satellite ou un système de géo-localisation par réseau Wifi ou un système de géo-localisation par réseau de téléphonie mobile.

## Patentansprüche

1. Verfahren zum Geolokalisieren der Umgebung eines Trägers, das die folgenden Schritte beinhaltet:
- Erfassen (201) mehrerer Aufnahmen der Umgebung des Trägers,
- Bestimmen (202) wenigstens einer Information in Bezug auf die Position des Trägers für einen Satz von Aufnahmen,
- Erzeugen (203) einer virtuellen Rekonstruktion der Umgebung auf der Basis der Aufnahmen des Satzes, von Positionsinformationen und eines Messabweichungsparameters (204) für jede Position, wobei die virtuelle Rekonstruktion in Abhängigkeit von der Messabweichung (204) parametrisiert wird,
- Modifizieren (206) des Messabweichungsparameters (204) zum Anwenden auf jede Position, um eine parametrisierte virtuelle Rekonstruktion durch eine modifizierte Messabweichung zu erhalten, wobei die Modifikation (206) so erfolgt, dass eine Distanz zwischen der modifizierten virtuellen Rekonstruktion und einer a priori virtuellen Darstellung (205) der Umgebung zu minimieren.

2. Verfahren zum Geolokalisieren der Umgebung eines Trägers nach Anspruch 1, bei dem die Erzeugung (203) einer virtuellen Rekonstruktion der Umgebung Folgendes beinhaltet:
- Korrigieren der einzelnen Navigationsdaten durch einen Abweichungsparameter (204),
- Erzeugen einer virtuellen Rekonstruktion der Umgebung auf der Basis der mehreren Aufnahmen und der korrigierten Positionsinformationen.

3. Verfahren zum Geolokalisieren der Umgebung eines Trägers nach Anspruch 1, bei dem die Erzeugung (203) einer virtuellen Rekonstruktion der Umgebung Folgendes beinhaltet:
- Erzeugen einer virtuellen Rekonstruktion der Umgebung auf der Basis von mehreren Aufnahmen,
- Anwenden einer Verformung auf die virtuelle Rekonstruktion, berechnet auf der Basis von Positionsinformationen und Abweichungsparametern (204).

4. Verfahren zum Geolokalisieren der Umgebung eines Trägers nach Anspruch 1, bei dem die Erzeugung (203) einer virtuellen Rekonstruktion der Umgebung das Erzeugen mehrerer geometrischer Elemente beinhaltet, die durch die Messabweichung parametrisiert werden und die Rekonstruktion definieren, und die Modifikation (206) der virtuellen Rekonstruktion der Umgebung die folgenden iterativ ausgeführten Teilschritte beinhaltet:
- einen Schritt des Erzielens einer Übereinstimmung zwischen mehreren parametrisierten geometrischen Elementen der virtuellen Rekonstruktion und mehreren festen geometrischen Elementen der a priori virtuellen Darstellung,
- einen Schritt des Berechnens von wenigstens einer Distanz zwischen mehreren parametrisierten geometrischen Elementen der virtuellen Rekonstruktion und mehreren entsprechenden festen geometrischen Elementen in der a priori Darstellung,
- einen Schritt des Modifizierens des Messabweichungsparameters, um die Distanz zu minimieren.

5. Verfahren zum Geolokalisieren der Umgebung eines Trägers nach einem der vorherigen Ansprüche, bei dem ein gleicher Abweichungswert mit einer Gruppe von Aufnahmen assoziiert ist.

6. Verfahren zum Geolokalisieren der Umgebung eines Trägers nach einem der vorherigen Ansprüche, bei dem die mit den verschiedenen Aufnahmen assoziierten Abweichungswerte untereinander durch ein parametrisiertes oder nicht parametrisiertes Modell verbunden sind.

7. Verfahren zum Geolokalisieren der Umgebung eines Trägers nach einem der vorherigen Ansprüche, bei dem der Satz von Aufnahmen in einem zeitlichen oder räumlichen Gleitfenster gemacht wird.

8. Verfahren zum Geolokalisieren der Umgebung eines Trägers nach einem der vorherigen Ansprüche, bei dem die Distanz zwischen der virtuellen Rekonstruktion und der a priori virtuellen Darstellung eine Punkt-zu-Punkt- oder Punkt-zu-Ebene- oder Ebene-zu-Ebene-Distanz im Raum oder ein Neuprojektionsfehler in der Ebene oder eine Kombination von mehreren dieser Distanzen ist.

9. Verfahren zum Geolokalisieren der Umgebung eines Trägers nach einem der vorherigen Ansprüche, bei dem die a priori virtuelle Darstellung der Umgebung eine kartografische Darstellung ist, die wenigstens ein Modell aus einem Geländehöhenmodell, einem dreidimensionalen Modell der Gebäude einer geografischen Zone, einer dreidimensionalen Punktwolke, einem Architektenplan ist.

10. Verfahren zum Geolokalisieren der Umgebung eines Trägers nach einem der vorherigen Ansprüche, wobei die Erfassung mehrerer Aufnahmen der Umgebung des Trägers mit Hilfe eines Systems zum Wahrnehmen der Umgebung des Trägers erfolgt.

11. Verfahren zum Geolokalisieren der Umgebung eines Trägers nach einem der vorherigen Ansprüche, wobei das Bestimmen wenigstens eines Navigationsdatenelements des Trägers für einen Satz von Aufnahmen mit Hilfe eines Triangulations-Lokalisierungssystems erfolgt.

12. Computerprogramm, das Befehle zum Ausführen des Verfahrens zum Geolokalisieren der Umgebung eines Trägers nach einem der Ansprüche 1 bis 11 umfasst, wenn das Programm von einem Prozessor ausgeführt wird.

13. Datenträger, lesbar für einen Prozessor, auf dem ein Programm gespeichert ist, das Befehle zur Ausführung des Verfahrens zur Geolokalisierung der Umgebung eines Trägers nach einem der Ansprüche 1 bis 11 umfasst, wenn das Programm von einem Prozessor ausgeführt wird.

14. System (100) zum Geolokalisieren, bestimmt zum Installieren an Bord eines Trägers, das Folgendes umfasst: ein System (SPE) zum Wahrnehmen der Umgebung des Trägers, das mehrere Aufnahmen erfassen kann, ein Triangulations-Lokalisierungssystem (SLT), das wenigstens ein Navigationsdatenelement für jede Aufnahme liefern kann, eine Datenbank (RE), die eine a priori virtuelle Darstellung der Umgebung enthält, und einen Prozessor (101), konfiguriert zum Ausführen des Verfahrens zum Geolokalisieren der Umgebung eines Trägers nach einem der Ansprüche 1 bis 11, um eine geolokalisierte virtuelle Rekonstruktion der Umgebung des Trägers zu produzieren.

15. Geolokalisierungssystem nach Anspruch 14, wobei das System (SPE) zum Wahrnehmen der Umgebung des Trägers eine Kamera für zweidimensionale Aufnahmen oder ein Paar Kameras für zweidimensionale Aufnahmen oder eine Kamera für dreidimensionale Aufnahmen oder ein Lidar-System oder ein Radar-System ist.

16. Geolokalisierungssystem nach Anspruch 14 oder 15, wobei das Triangulations-Lokalisierungssystem (SLT) ein Geolokalisierungssystem über Satellit oder ein Geolokalisierungssystem über WiFi-Netzwerk oder ein Geolokalisierungssystem über das Mobilfunkwerk ist.

## Claims

1. A method for geo-localizing the environment of a carrier, comprising the following steps:
- acquiring (201) a plurality of shots of the environment of the carrier;
- determining (202) at least one piece of information relating to the position of the carrier for a set of shots;
- generating (203) a virtual reconstruction of the environment from the shots of said set, from the positional information and from a measurement bias parameter (204) for each position, said virtual reconstruction being parameterized depending on the measurement bias (204); and
- modifying (206) the measurement bias parameter (204) to be applied at each position to obtain a virtual reconstruction parameterized by a modified measurement bias, the modification (206) being carried out so as to minimize the distance between said modified virtual reconstruction and an *a priori* virtual representation (205) of the environment.

2. The method for geo-localizing the environment of a carrier as claimed in claim 1, wherein the generation (203) of a virtual reconstruction of the environment comprises:
- correcting each navigational data with a bias parameter (204);
- generating a virtual reconstruction of the environment from the plurality of shots and corrected positional information.

3. The method for geo-localizing the environment of a carrier as claimed in claim 1, wherein the generation (203) of a virtual reconstruction of the environment comprises:
- generating a virtual reconstruction of the environment from the plurality of shots;
- applying, to said virtual reconstruction, a deformation calculated from positional information and bias parameters (204).

4. The method for geo-localizing the environment of a carrier as claimed in claim 1, wherein the generation (203) of a virtual reconstruction of the environment comprises generating a plurality of geometric elements parameterized by said measurement bias, and defining said reconstruction and the modification (206) of the virtual reconstruction of the environment comprises the following substeps, which are executed iteratively:
- a step of matching a plurality of parameterized geometric elements of the virtual reconstruction with a plurality of fixed geometric elements of the *a priori* virtual representation;
- a step of calculating at least one distance between a plurality of parameterized geometric elements of said virtual reconstruction and a plurality of corresponding fixed geometric elements in said *a priori* representation; and
- a step of modifying said measurement bias parameter so as to minimize said distance.

5. The method for geo-localizing the environment of a carrier as claimed in one of the preceding claims, wherein the same bias value is associated with a group of shots.

6. The method for geo-localizing the environment of a carrier as claimed in one of the preceding claims, wherein the values of the biases associated with the various shots are related to one another by a parametric or nonparametric model.

7. The method for geo-localizing the environment of a carrier as claimed in one of the preceding claims, wherein said set of shots is taken in a moving window that is mobile in time or in space.

8. The method for geo-localizing the environment of a carrier as claimed in one of the preceding claims, wherein the distance between said virtual reconstruction and the *a priori* virtual representation is a point-to-point or point-to-plane or plane-to-plane distance in space or a reprojection error in the plane or a combination of a plurality of these distances.

9. The method for geo-localizing the environment of a carrier as claimed in one of the preceding claims, wherein the *a priori* virtual representation of the environment is a cartographic representation comprising at least one model selected from a terrain elevation model, a three-dimensional model of the buildings of a geographical zone, a three-dimensional point cloud, an architectural plan.

10. The method for geo-localizing the environment of a carrier as claimed in one of the preceding claims, wherein the acquisition of a plurality of shots of the environment of the carrier is carried out using a system for perceiving the environment of the carrier.

11. The method for geo-localizing the environment of a carrier as claimed in one of the preceding claims, wherein the determination of at least one navigational datum of the carrier for a set of shots is carried out using a system for localizing by triangulation.

12. A computer program including instructions for executing the method for geo-localizing the environment of a carrier as claimed in any one of claims 1 to 11, when the program is executed by a processor.

13. A processor-readable storage medium on which is stored a program including instructions for executing the method for geo-localizing the environment of a carrier as claimed in any one of claims 1 to 11, when the program is executed by a processor.

14. A geo-localizing system (100) with which a carrier is intended to be equipped, comprising a system (SPE) for perceiving the environment of the carrier, able to acquire a plurality of shots, a system (SLT) for localizing by triangulation, able to deliver at least one navigational datum for each shot, a database (RE) containing an *a priori* virtual representation of the environment and a processor (101) configured to execute the method for geo-localizing the environment of a carrier as claimed in any one of claims 1 to 11 in order to produce a geo-localized virtual reconstruction of the environment of the carrier.

15. The geo-localizing system as claimed in claim 14, wherein the system (SPE) for perceiving the environment of the carrier is a video camera taking two-dimensional shots or a pair of video cameras taking two-dimensional shots or a video camera taking three-dimensional shots or a lidar system or a radar system.

16. The geo-localizing system as claimed in either of claims 14 and 15, wherein the system (SLT) for localizing by triangulation is a satellite geo-localizing system or a Wi-Fi geo-localizing system or a cell-phone-network-based geo-localizing system.
